# EUROPÄISCHE PATENTANMELDUNG

(11) **EP 1 528 504 A1**
(43) Veröffentlichungstag der Anmeldung: **04.05.2005**
(21) Anmeldenummer: 04425800.2
(22) Anmeldetag: 26.10.2004
(51) Int. Cl.: G06K 19/077, G06K 7/00, D06F 93/00

(54) **Verfahren zur Kontrolle von Textilien für Waeschereien basierend auf RFID Technologie**

(30) Priorität: 03.11.2003 IT RM20030511
(71) Anmelder: Tessuti Zampagna S.R.L., 00159 Roma (IT)
(72) Erfinder: Gravina, Damiano, c/o Tessuti Zampagna S.R.L., 00159 Roma (IT)

(57) **Zusammenfassung**

Loesung zur Automatisierung der Taetigkeit - die z. Z. vom Personal ausgeuebt wird - im Bereich von Waeschereien zur Zaehlung der Waeschestuecke und zur Optimierung der Waschsysteme, mit einem System mit Radiofrequenzen.

Das Verfahren besteht darin, an die Waeschestuecke eine elektronische Etikette (TAG) anzubringen, die aus einem Chip besteht, der Infomationen zur Identifizierung der Qualitaet und Farbe der Textilien, des Typs des Stueckes, usw., des Codes des Herstellers, des Ausleihers und des Endkunden, und evt. andere nuetzliche Daten zur industriellen Verwendung enthaelt.

Ein Lesegeraet kann augenblicklich die gesamten Stuecke in einem Behaelter zaehlen, die Wasch- und Buegelverfahren, die Programmierung des Lagerumschlags, die Statistiken Kunde/Umsatz optimieren. Das gilt sowohl fuer die abgeholte Waesche, als auch fuer die Waesche, die beim Kunden ist, der die gleiche Waesche bekommen wird, die er am Anfang als Ausstattung hatte.

## Beschreibung

1.Es wird die RFID Technologie (radio frequency identification) eingesetzt, welche die automatische Datenerfassung (durch elektromagnetische Felder) ermoeglicht. Damit wird eine Identifizierung garantiert (das System besteht aus einem Chip, einem Kondensator und einer Antenne - der Kondensator empfaengt ein Radiosignal mit einer bestimmten Wellenlaenge, laedt sich und der Schaltkreis nimmt genuegend Energie auf, damit die im Chip enthaltene Information durch die Antenne an das Lese - Schreibgeraet, genannt RFID Terminal, gesendet wird) fuer die Kontrolle der Waeschestuecke und/oder Bettwaesche und/oder Berufsbekleidung, die fuer den Arbeitsablauf sowohl der Waeschereien, welche die Waesche reinigen und ausleihen, als auch der Waeschereien in den Hotels, Krankenhaeuser, Einrichtungen und Heime der Kirche oder Universitaet, bestimmt sind. Diese Chips haben eine Huelle aus Epoxidharz (epoxy resin), so dass sie auch unter schweren Bedingungen unbeschaedigt bleiben, sie erhalten damit einen besonderen Schutz gegen Thermoschocks (industrielle Reinigungen bei 90° - Bestaendigkeit beim Buegeln bei 200°C) und Saeure -und Alkalibestaendigkeit und koennen verschiedene Formen haben (rund, viereckig, rechteckig).

2. Unter Waeschestuecken und/oder Bettwaesche versteht man weisse oder bunte Textilien aus 100% Baumwolle - Mischgewebe/Leinen - Baumwolle/Polyester - 100% Leinen - 100% Polyester - Faser aus hochfestem Polyethylen (wie Dyneema©) - Kevlar© - Nomex© - Teflon©, Kohlefaser und jegliche Art von Material, das gewebt werden kann.

3.Unter Berufsbekleidung versteht man Kleidung, die im Restaurant und Hotelbereich - in den Krankenhaeusern - in den Einrichtungen und kirchlichen Heimen - in der Industrie im allgemein verwendet werden.

4.Die Technologie, auf die wir uns beziehen, funkioniert mit den TAGs (auch Trasponder genannt), Chips, die von (multinationalen und auch keine multinationalen) elektronischen Unternehmen hergestellt werden, und die wie im Punkt 1. erlaeutert, funktionieren, d.h. es sind kleine Sende- und Empfangsgeraete, welche die Daten speichern, die nur von autorisierten Verbrauchern mit einem Password veraendert werden koennen, so dass die Sicherheit gegen einen evt. Betrug gewaehrleistet und die Sicherheit des Verfahrens und des Produktes erhoeht wird. Diese Chips koennen auf oder innerhalb jedes Waeschestuecks, auf oder innerhalb der Etiketten angebracht und/oder genaeht werden, die spaeter auf die im Punkt 2. genanntenTextilien angebracht werden. Jedes Mal wenn die TAGs in der Naehe eines RFID Terminals sind, wird das Waeschestueck identifiziert, so dass man auf alle Infomationen zurueckgreifen kann, welche die Textilien betreffen.

5. Das RFID Terminal kann mit den Informationssystemen fuer die Verwaltung der im Punkt 1. genannten Strukturen zusammenwirken, indem es die im TAG enthaltenen Informationen (Daten) mit den Verwaltungssystemen der verschiedenen Produktionsverfahren verbindet, denen das Stueck bestimmt ist, auf diese Weise werden wichtige Optimierungen ermoeglicht:
A - Zaehlung und Kontrolle der Ware, aus denen sich eindeutige Codes fuer jedes verschmutztes Waeschestueck ergeben, Identifizierung des letzten Verbrauchers wegen evt. Belastungen fuer zerrissene oder nicht mehr ausleihbare Waeschestuecke.
B - Zaehlung und Kontrolle der sauberen Ware (Punkt 2. und 3.), in Cellophanbeutel verpackt mit Etikettierung durch einen Leser/Schreiber, nachdem die Chips erfasst worden sind, mit Bezeichnung des Codes fuer jedes Waeschestueck und Zahl der Waeschestuecke und Bestimmung der Stuecke im Lager.
C - Kontrolle der Ware (Punkt 2. und 3.), die aus dem Lager kommt und die dem Fahrer zur Verteilung gegeben wird, indem die Daten, die aus den Etiketten von jeder Packung erfasst werden, auf den Versandscheinen fuer den Fahrer und fuer die Ausladung der Ware aus dem Lager registriert werden.
D - Bei der Lieferung der sauberen Ware beim Kunden-Verbraucher (z.B. Restaurant, Hotel, Krankenhaus, oeffentliche Einrichtung, kirchliche Einrichtung), fuegt der Fahrer dem Lieferschein, der dem Kunden gegeben wird, und der Kopie, die in seinem Besitz bleibt, die Etiketten jeder einzelnen Verpackung bei, die tatsaechlich geliefert wurde. Wenn die Ware oder die Waeschestuecke, die der Kunde verwendet hat, verschmutzt abgeholt und zur Reinigung der Waescherei gebracht werden, kann der Operateur auf diese Weise beim Buegeln, wenn die Waeschestuecke zerrissen oder nicht mehr ausleihbar sind, den letzten Verbraucher mit Sicherheit identifizieren und ihn fuer evt. Schaeden aufkommen lassen.

6. Die im Punkt 4 genannten TAGs (Chips) koennen mit niedriger Frequenz (100 - 150 KHz), Mittelfrequenz (13,5 MHz) und hohe Frequenz (2,5 GHz) arbeiten.

7.Der Vorteil des RFID Systems, im Vergleich mit anderen Erfassungs- oder Identifizierungssystemen ist die Verwendung von Vorrichtungen, die in zahlreichen ganz verschiedenen Verwendungsbereichen nach den Punkten 1., 2., und 3. anpassbar sind. Es vereinfacht und beschleunigt das Lesen und Schreiben und verwendet dabei verschiedene Anlagetypen (ortsfest, beweglich, tragbar), die durch eine Schnittstelle mit dem Netz von jedem Verbraucher verbunden werden koennen,
wie z.B. einen Handcomputer mit der Moeglichkeit der Ausgabe des Lieferscheins oder eine Plattform, worauf die Waeschestuecke durchgehen.

8.Die im TAG enthaltenen Informationen (Daten), auf die wir uns im Punkt 5. beziehen, koennen von wenigen Bits bis zu einigen KBytes variieren. Sie koennen als Bit, Byte, Word oder Bloecke davon erfasst werden. Es koennen Typ ROM (nur Lesen) oder Typ EPROM (Lesen und Schreiben) oder EEPROM sein und sie koennen getrennt oder zusammen verwendet werden. Die verschiedenen Speicher des von uns erwaehnten Systems koennen grenzenlos verwendet werden, denn es haengt von der Groesse der Struktur ab, die sie benutzt (Informationsmenge, die in die Chips eingegeben werden muss).

9.Unter den im Punkt 5. genannten Daten (Informationen) versteht man Informationen ueber den Typ des Waeschestuecks (Punkt 2. und 3.), es kann also eine Serviette oder ein Bettlaken sein, und auch Informationen ueber den Arbeitsablauf (Punkt 5.) des behandelten Stuecks (chemische Reinigung, mit Wasser Waschen, Zahl der vorgesehenen Waschgaenge, Identifizierung des Kunden, usw.). Auf diese Weise ist es moeglich, die Historie des Waeschestuecks zu erfahren, den Kunden aufzufinden, der das behandelte Stueck beschaedigt oder das Waeschestueck aufzufinden, das beim Arbeitsablauf weniger Bestaendigkeit aufweist. All dies ist es mit den heutigen Systemen nicht moeglich, gleichzeitig werden die Lieferscheine und Rechnungen dank der Moeglichkeit des multiplen und simultanen Lesens (d.h. mehrere Waeschestuecke in einem Behaelter, in einem Wagen oder auf einem Foerderband in wenigen Sekunden) automatisch erstellt, so dass das ganze Informationssystem in einer realen Zeit auf dem neuesten Stand gebracht wird. Das von uns erdachte System ist eine Neuigkeit, da es keine Systeme zur multiplen und simultanen Zaehlung gibt, die im Arbeitsablauf der Textilbereiche und im allegemein im Bereich der Kategorien nach den Punkten 1., 2. und 3., angewendet werden.

10.Die im Punkt 4. genannten RFID Terminals koennen tragbar sein, um am Ort die Daten aufzunehmen (Handcomputer), beweglich (eingebaut auf Wagen oder Hubwagen, oder ortsfest (Kontrolle auf der Produktionslinie) und unterscheiden sich in der Groesse, Gewicht und Form.

Inanspruchnahme auf das patent. Hiermit wird auf die im folgenden genannte Erfindung/auf das im folgenden genannte Patent Anspruch erhoben:
Auf

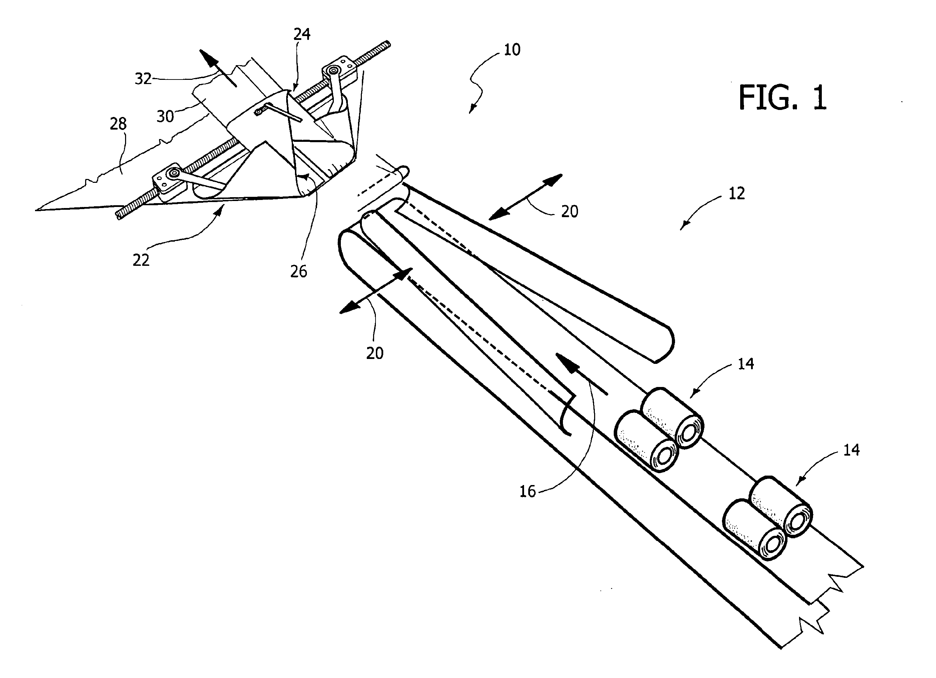

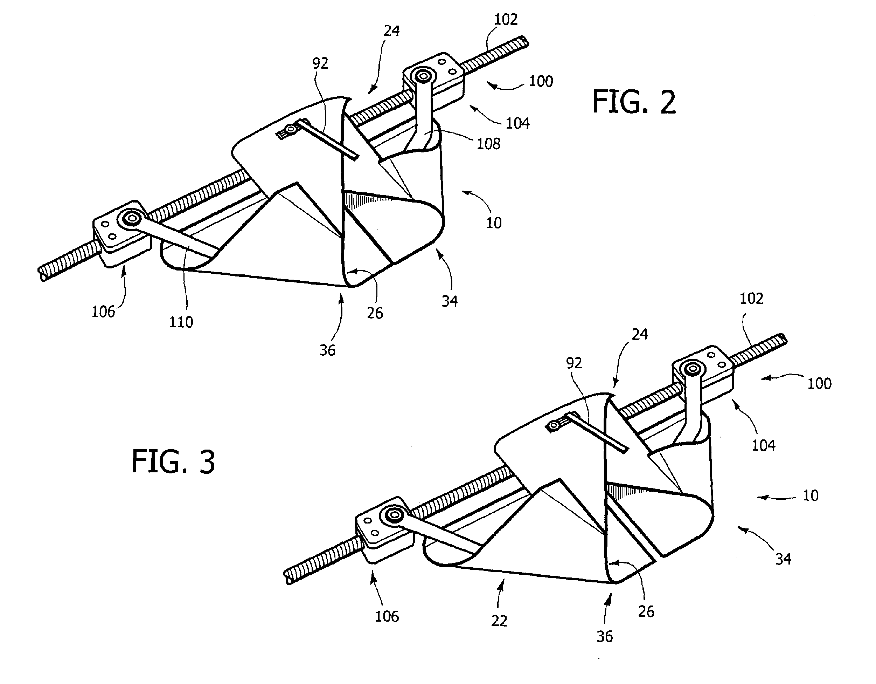

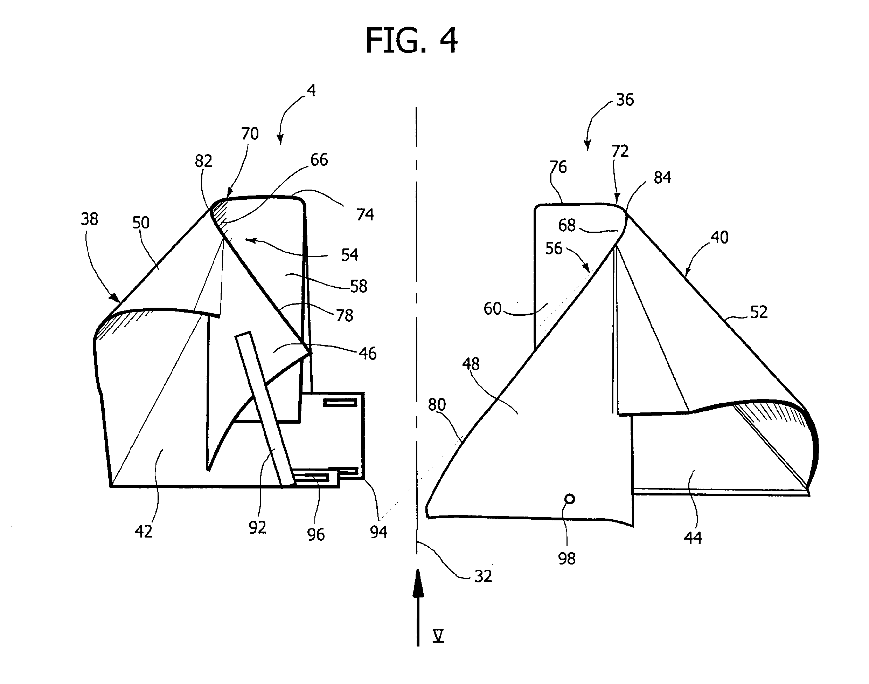

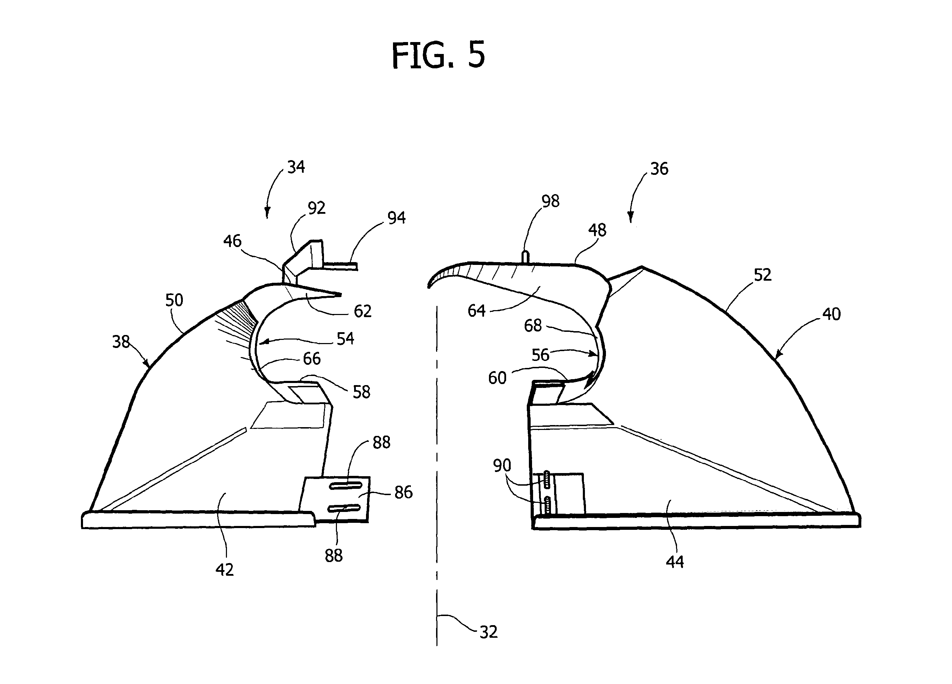

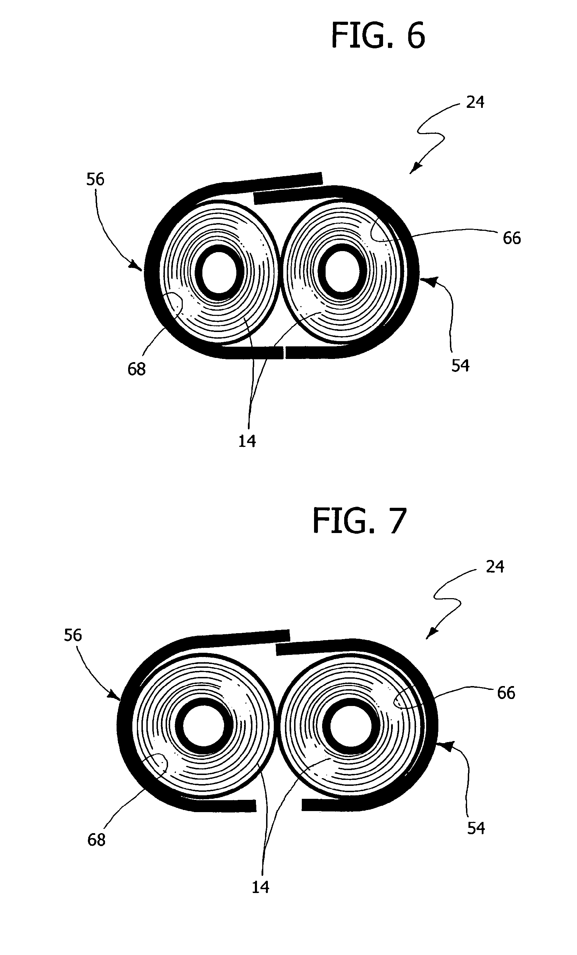

## Patentansprüche

1. Textilien, die ein angepasstes System zur Zaehlung, Kennzeichnung und Identifikation der Textilien selbst enthalten, d.h. Waeschestuecke fuer Restaurants - Krankenhaeuser - Einrichtungen und Heime - Berufsbekleidung fuer die Industrie und fuer Heime aus 100% Baumwolle - 100% Leinen - Baumwolle Polyester - 100% Polyester - Mischgewebe Leinen, durch Anwendung der RFID Technologie. Dieses System enthaelt einen angepassten Chip zur Speicherung der Daten ueber die Historie der Textilien selbst.

2. Textilien nach Punkt 1. der Inanspruchnahme, in denen die Textilien natuerliche Faser enthalten, vorzugsweise der Gruppe von Leinen, Baumwolle, Wolle zugehoerend, oder synthetische Faser enthalten, vorzugsweise der Gruppe von Polyester, Lycra©, Teflon© zugehoerend.

3. Textilien nach irgendeinem vorhergehenden Punkt dieser Inanspruchnahme, in denen der Chip innerhalb der Textilien selbst eingesetzt wird.

4. Textilien nach irgendeinem Punkt von 1. bis 3. dieser Inanspruchnahme, in denen der Chip auf eine Seite der Textilien selbst angebracht wird.

5. Textilien nach irgendeinem Punkt von 1. bis 4. dieser Inanspruchnahme, in denen die Textilien eine Etikette haben und der Chip auf diese Etikette angebracht wird.

6. Textilien nach irgendeinem vorhergehenden Punkt dieser Inanspruchnahme, in denen der Chip mit einer externen Beschichtung ueberzogen ist, die in der Lage ist, ihn bei den industriellen Reinigungen und/oder Trocknungsverfahren und/oder beim industriellen Buegeln und/oder in saurer und alkalischer Umgebung zu schuetzen.

7. Textilien nach Punkt 6. dieser Inanspruchnahme, in denen die externe Beschichtung ein Harz, vorzugsweise Epoxidharz (epoxy resin), enthaelt.

8. Textilien nach irgendeinem vorhergehenden Punkt dieser Inanspruchnahme , in denen der Chip eine viereckige, rechteckige oder polygonale, vorzugsweise eine runde Form hat.

9. Textilien nach irgendeinem vorhergehenden Punkt dieser Inanspruchnahme, in denen der Chip einen maximalen Durchmesser zwischen 16mm und 22 mm hat.

10. Textilien nach irgendeinem vorhergehenden Punkt dieser Inanspruchnahme, in denen die Daten des Chips Informationen ueber jedes einzelne (über den Typ/die Art) Waeschestueck (sei es Serviette, Tischdecke, Bettlaken, usw.), und Informationen ueber den Arbeitsablauf des behandelten Stueckes (chemische Reinigung, mit Wasser Waschen, Identifizierung des Kunden, usw.) enthalten.

11. Textilien nach irgendeinem vorhergehenden Punkt dieser Inaspruchnahme, in denen der Chip eine ROM-, oder EPROM- oder EEPROM-Einheit enthaelt.

12. Ein System, das in der Lage ist, die in den Textilien gespeicherten Daten nach irgendeinem vorhergehenden Punkt dieser Inanspruchnahme zu lesen, wo dieses System auf eine mobile Einrichtung, die der Bewegung der Stuecke angepasst wird, vorzugsweise auf einen Wagen oder auf einen Hubwagen, angebracht wird, oder wo dieses System auf eine ortsfeste Einrichtung, die der Bewegung oder der Behandlung der Textilien angepasst wird, z. B. Auf ein Foerderband und/oder auf eine Waschmaschine und /oder auf einen Korb wie bei einer Waschmaschine, angebracht wird.

13. Ein System, das Textilien nach irgendeinem Punkt von 1. bis 11 dieser Inanspruchnahme und ein System nach dem Punkt 12. der Inanspruchnahme umfasst.

14. Eine Methode zur Identifizierung der Historie der Textilien, die folgende Schritte umfasst:
a)Verwendung von Textilien nach irgendeinem Punkt von 1. bis 11. dieser Inanspruchnahme
b)Lesen der im Chip enthaltenen Daten
c)Feststellung der naechsten Behandlungsart der Textilien

15. Eine Methode nach dem Punkt 14. dieser Inanspruchnahme, in der der Schritt c) durch einen automatischen Vergleich der Daten des Chips mit den Bezugsdaten, die in einer mit dem Datenlesesystem verbundenen Datenbank enthalten sind, vorgenommen wird.
